# EUROPEAN PATENT APPLICATION

(11) **EP 2 110 235 A1**
(43) Date of publication of application: **21.10.2009**
(21) Application number: 08167217.2
(22) Date of filing: 22.10.2008
(51) Int. Cl.: B32B 15/01, C22C 21/02, C22F 1/05

(54) **Al-Mg-Si alloy rolled sheet product with good hemming**

(71) Applicant: Aleris Aluminum Duffel BVBA, 2570 Duffel (BE)
(72) Inventor: Ratchev, Petar, 3020 Herent (BE); De Smet, Peter, 9830 Sint-Martens-Latem (BE)
(74) Representative: Müller, Frank Peter

(57) **Abstract**

This invention relates to an aluminium alloy sheet product with improved hemming performance suitable for use for an automotive body, the aluminium alloy having a composition consisting of, in wt.%: Si 0.6 to 1.5, Mg 0.2 to 0.65, Fe 0.03 to 0.19, Cu up to 0.30, optionally one or more elements selected from the group consisting of: (Mn up to 0.25, Zr up to 0.1, Cr up to 0.1), Zn up to 0.20, Ti up to 0.15, impurities each <0.05, total <0.20, balance aluminium.

## Description

### FIELD OF THE INVENTION

The invention relates to an Al-Mg-Si alloy or an AA6000-series aluminium alloy rolled sheet product with improved hemming performance, and the sheet product can be applied as automotive body sheet. The invention further relates to a method of manufacturing such a rolled sheet product.

### BACKGROUND TO THE INVENTION

Generally, outer body panels of a vehicle require excellent physical properties in formability, dent-resistance, corrosion resistance and surface quality. However, the conventional AA5000-series alloy sheets have not been favoured because they have low mechanical strength even after press forming and may also exhibit poor surface quality. Therefore, the use of AA6000-series sheet alloys have been increasingly used. The AA6000-series alloys provide excellent bake hardenability after painting and high mechanical strength as a result, thus making it possible to manufacture a more thin-gauged and more light-weight sheets in combination with a class A surface finish.

The vehicle body hang-on parts, such at the bonnet and the like, in general, are manufactured by the mechanical assembly between inner parts and outer parts. For example, the proper length of a flange is prepared and formed at the end of an outer panel of a vehicle. An inner panel is fixed onto the inside of the outer panel, and the flange of the outer panel is bent and folded to produce a mechanical binding. The whole process described is called "hemming".

In the hemming process, it is preferred to perform a flat hemming (180° process), which has very strict processing conditions and a relatively low ratio (r/t) between the bending centre radius (r) and the thickness of a sheet (t). However, the bending property of AA6000-series sheet products are inferior to that of AA5000-series alloys. Thus performing a flat hemming at parts where press induced property is relatively high (i.e., a part with much transformation or deformation) results in a higher defect rate.

US patent no. 4,174,232 discloses a process for fabricating age-hardenable aluminium alloys of the Al-Mg-Si type using a specific annealing process. The disclosed aluminium is also embraced by the registered AA6016 alloy. The chemical composition of the registered AA6016 is, in wt.%:
- Si: 1.0 to 1.5
- Mg: 0.20 to 0.6
- Fe: up to 0.50
- Cu: up to 0.25
- Mn: up to 0.20
- Cr: up to 0.10
- Zn: up to 0.20
- Ti: up to 0.15,
impurities each <0.05, total <0.15, balance aluminium.
The AA6016 rolled sheet products in the higher strength range when used for automotive parts are known to have a poor hemming performance.

There is a need for selection of aluminium alloy rolled sheet products and methods for producing vehicle parts or members providing good strength and levels of formability into vehicle parts without cracking.

### DESCRITION OF THE INVENTION

It is an object of the invention to provide an Al-Mg-Si alloy or AA6000-series alloy rolled sheet product having improved levels of hemming.

It is another object of the invention to provide an Al-Mg-Si alloy or AA6000-series alloy rolled sheet product having improved levels of hemming and sufficient strength for producing vehicle parts or members.

These and other objects and further advantages are met or exceeded by the present invention concerning an aluminium alloy sheet product suitable for use for an automotive body, the aluminium alloy consisting of, in wt.%:
- Si: 0.6 to 1.5, preferably 0.85 to 1.20,
- Mg: 0.2 to 0.65, preferably 0.45 to 0.65,
- Fe: 0.03 to 0.19
- Cu: up to 0.30,
optionally one or more elements selected from the group consisting of:
(Mn up to 0.25, Zr up to 0.1, and Cr up to 0.1)
- Zn: up to 0.20
- Ti: up to 0.15,
impurities each <0.05, total <0.20, balance aluminium.

As will be appreciated herein below, except as otherwise indicated, all aluminium alloy designations and temper designations refer to the Aluminium Association designations in Aluminium Standards and Data and the Registration Records, as published by the Aluminium Association in 2008.

For this invention the term "sheet" or "sheet product" refers to a rolled product form up to 2.5 mm in thickness.

For any description of alloy compositions or preferred alloy compositions, all references to percentages are by weight percent unless otherwise indicated.

According to the present invention there is provided an aluminium alloy rolled sheet product having a chemical composition closely associated with, but having preferred narrower ranges, to the known AA6016 or AA6016A but having a carefully controlled reduced amount of iron (Fe) to provide an improved hemming performance compared to an aluminium alloy composition with higher Fe levels and having otherwise the same composition. To date aluminium alloy rolled sheet products within the AA6016 range and used for the industrial scale production of automotive bodies have commonly an Fe content of higher than 0.20%.

The Fe content in the alloy sheet product should not exceed 0.19%, and preferably it should not exceed 0.18%. A more preferred upper-limit for the Fe content is 0.14%. A lower Fe-content is favourable for the hemming performance of the sheet product. A preferred lower limit for the Fe-content is 0.05%, and more preferably 0.07%. A too low Fe content may lead to undesirable recrystallized grain coarsening and makes the aluminium alloy too expensive.

The purposive addition of Mg and Si strengthens the alloy due to precipitation hardening of elemental Si and Mg₂Si formed under the co-presence of Mg. In order to provide a sufficient strength level in the sheet product according to the invention the Si content should be at least 0.6%, and preferably at least 0.85%. A preferred upper-limit for the Si content is 1.20%, and more preferably 1.15%. The presence of Si enhances also the formability.

Substantially for the same reason as for the Si content, the Mg content should be at least 0.2%, and preferably at least 0.3%, and more preferably at least 0.45% to provide sufficient strength to the sheet product.

Each of Mn, Cr, and Zr could be present to control the grain size in the alloy sheet product.

In a preferred embodiment at least Mn is present in a range of 0.12 to 0.2%, and more preferably in a range of 0.15 to 0.2%. Mn is added for grain size control. A too low Mn content may lead to undesirable grain coarsening, in particular with a low Fe content in accordance with this invention.

Cu can be present in the sheet product, but it should not exceed 0.30%, in order to maintain a good corrosion performance. In a preferred embodiment Cu is purposively added in a range of 0.12 to 0.25%, and preferably 0.15 to 0.2%. It appears that Cu is affecting the precipitation sequence of the hardening Mg₂Si phase leading to a favourable stabilization of the pre-ageing properties and a higher paint-bake response.

Zn is an impurity element that can be tolerated up to 0.20%.

Ti can be added to the sheet product for grain refiner purposes of the as-cast structure. Unavoidable impurities can be present up to 0.05 each, and a total of 0.20%, the balance is made with aluminium.

In another aspect of the invention there is provided a method of forming an aluminium alloy rolled sheet product particularly suitable for use for an automotive body, the method comprising:
(a) casting a body of an aluminium alloy having a composition according to this invention,
(b) working, e.g. by means of hot and/or cold rolling, said body to produce said sheet,
(c) solution heat treating said sheet,
(d) rapidly quenching said sheet, and
(e) pre-ageing and naturally ageing said sheet prior to forming into an automotive body member. A formed automotive body member includes bumpers, doors, hoods, trunk lids, fenders, floors, wheels and other portions of an automotive or vehicle body. Forming includes deep-drawing, pressing, and stamping. After forming, the painting and baking may be carried out. The baking temperature is ordinarily at a temperature in a range of 150° to 220°C.
This method achieves the effect that an aluminium sheet product is provided having improved levels of hemming rendering the sheet product ideally suitable for forming into an automotive member.

In a preferred embodiment of this method the solution heat-treatment temperature is relatively low, viz. in a range of 540 to 555°C, and is preferably just above the solvus temperature of the Mg₂Si and Si phases.

In one embodiment of the invention the aluminium rolled sheet product is provided as a uni-alloy system, thus as a rolled product for use for an automotive body member devoid of one or more metallic layers applied onto the rolled sheet product.

In another embodiment of the invention the aluminium rolled product is provided as a clad layer (a so-called liner) onto a core sheet of another nominal chemical composition to obtain a composite sheet product suitable for use for an automotive body member. The core sheet is ideally of an aluminium alloy selected from the group of an AA5000, AA6000, or AA7000-series aluminium alloy used for automotive applications. In particular the AA6000-series can be used for this purpose, and include AA6016, AA6022, AA6056, AA6013, and AA6111.
From the AA7000-series in particular the alloys AA7020, AA7021, AA7029, AA7050, AA7075, AA7003, and AA7004 can be used. From the AA5000-series in particular the alloys AA5022, AA5023, AA5082, AA5182, AA5186, AA5059, AA5083, AA5058, and AA5088 can be used.
By using an aluminium alloy core sheet with on one or both sides a cladding of the aluminium alloy according to this invention the hemming behaviour is improved while maintaining the strength of the composite sheet product as a whole at a sufficiently high level as a resultant of the core sheet. Furthermore the paint bake response and the dent resistance of the core sheet are maintained. To further improve on the hemming behaviour the liner alloy can be provided with a Si content in a range of 0.6 to 0.8%, and preferably in the range of 0.6 to 0.7%. Alternatively, or in combination with a relatively low Si content, the Mg content in the liner should be set in range of 0.2 to 0.45%, and preferably in a range of 0.2 to 0.4%. In this particular application the hemming performance is of more importance than the strength requirement, for that reason the Si and/or the Mg content can be selected at the lower end of the claimed ranges.
In a preferred embodiment the cladding layer or liner is applied on one core sheet surface only. Although the dimensions of the composite sheet product can be varied in many ways, for the preferred use as automotive body sheet the core material has a thickness in the range of about 0.5 to 2 mm, preferably about 0.7 to 1.3 mm. The cladding layer or cladding layers from the aluminium alloy according to the invention are much thinner than the core sheet, each clad layer constituting about 1 to 25% of the total composite sheet product thickness. A cladding layer more typically constitutes about 2 to 12% of the total composite sheet product thickness. Such composite sheet product can be produced in various ways, for example by means of roll bonding or by techniques wherein the core material is attached to the cladding layer by casting techniques, for example as disclosed in EP-1638715-A.

The invention will now be illustrated with reference to a non-limiting embodiment according to the invention.

### EXAMPLE.

On an industrial scale two different sheet products have been manufactured and processed to sheet products of 1 mm in a T4P temper. The exact alloy compositions are listed in Table 1, and where alloy 2 is an alloy according to this invention.
The "T4P" temper is a condition wherein the sheet product produced in a T4 process with pre-ageing. The pre-ageing treatment is the last step in the procedure prior to forming a sheet product into a shaped panel or structural component for a vehicle. A "T4P" indicates typically a process where the alloy sheet has been solution heat treated, pre-aged and naturally aged for at least several hours.
The two different sheet products had been solution heat treated at 545°C and then quenched, and within several minutes re-heated to about 85°C followed by coil cooling to room temperature and then after 3 weeks at room temperature tested while being in the so-called T4P-temper for its hemming performance.
The hemming performance had been tested via a flat hemming test by bending the samples 180o with a bending radius of 0.0 mm as included in ASTM norm E290-97A and followed by a visually assessment. A score was given according to the following rating: rating "5" represents no visual defects, "4" mild surface roughening, "3" severe surface roughening, "2" small surface cracks, and "1" represents continuous surface cracks, and whereby a further sub-rating of for example 3¼, 3½, and 3¾ is used.

**Table 1. Alloy composition in wt.% of the two alloy sheet products tested, balance aluminium and inevitable impurities.**

| **Alloy** | **Si** | **Mg** | **Fe** | **Cu** | **Mn** | **Cr** | **Ti** |
|---|---|---|---|---|---|---|---|
| **1** | 0.92 | 0.59 | 0.23 | 0.18 | 0.18 | 0.03 | 0.02 |
| **2** | 0.92 | 0.56 | 0.11 | 0.16 | 0.17 | 0.03 | 0.02 |

The hemming performance of both sheet products in the T4P temper had been tested in the critical longitudinal direction (bending axis parallel to the transfers direction) and whereby Alloy 1 had a rating of 1¾ and Alloy 2 had an significantly improved rating of 2½.

From these results it can be seen that lowering the Fe-content in the alloy sheet product has a significant and favourable effect on the hemming performance without adversely affecting the other engineering properties of the sheet product, such as strength, corrosion resistance and dent-resistance.

The invention is not limited to the embodiments described before, which may be varied widely within the scope of the invention as defined by the appending claims.

## Claims

1. An aluminium alloy sheet product suitable for use for an automotive body, the aluminium alloy having a composition consisting of, in wt.%:
Si 0.6 to 1.5
Mg 0.2 to 0.65
Fe 0.03 to 0.19
Cu up to 0.30,
optionally one or more elements selected from the group consisting of:
( Mn up to 0.25, Zr up to 0.1, Cr up to 0.1 ),
Zn up to 0.20
Ti up to 0.15,
impurities each <0.05, total <0.20, balance aluminium.

2. Aluminium alloy sheet product according to claim 1, wherein the Fe content is in the range of 0.05 to 0.18%, preferably 0.07 to 0.14%.

3. Aluminium alloy sheet product according to claim 1 or 2, wherein the Si content is in the range of 0.85 to 1.20%.

4. Aluminium alloy sheet product according to any one of claims 1 to 3, wherein the Mg content is in the range of 0.3 to 0.65%, preferably 0.45 to 0.65%.

5. Aluminium alloy sheet product according to any one of claims 1 to 4, wherein the aluminium alloy has Cu in a range of 0.12 to 0.25%, and preferably in a range of 0.15 to 0.2%.

6. Aluminium alloy sheet product according to any one of claims 1 to 5, wherein the aluminium alloy has Mn in a range of 0.12 to 0.2%.

7. The aluminium alloy sheet product according to any one of claims 1 to 6 in the form of a vehicular panel.

8. A method of forming an aluminium alloy rolled sheet product particularly suitable for use for an automotive body, the method comprising:
(a) casting a body of an aluminium alloy having a composition according to any one of claims 1 to 6,
(b) working said body to produce said sheet,
(c) solution heat treating said sheet, preferably in a temperature range of 540 to 555°C,
(d) rapidly quenching said sheet, and
(e) pre-ageing and naturally ageing said sheet prior to forming into an automotive body member.

9. Use of an aluminium alloy sheet product according to any one of claims 1 to 6 or obtained by the method according to claim 8 as uni-alloy product.

10. Use of an aluminium alloy sheet product according to any one of claims 1 to 6 or obtained by the method according to claim 8 as a metallic clad layer or a AA5000, AA6000, or AA7000-series alloy for an automotive application.
